# EUROPEAN PATENT SPECIFICATION

(11) **EP 1 200 950 B1**
(45) Date of publication and mention of the grant of the patent: **26.05.2004**
(21) Application number: 00907302.4
(22) Date of filing: 16.02.2000
(51) Int. Cl.: G09F 3/02, G06F 17/60, B42D 15/02

(54) **A METHOD FOR DIRECT MAIL ADVERTISING**
VERFAHREN FÜR DIREKTWERBEMITTELVERSAND
PROCEDE DE PUBLICITE PAR COURRIER DIRECT

(30) Priority: 22.07.1999 US 359104
(43) Date of publication of application: 02.05.2002
(73) Proprietor: 3M Innovative Properties Company, St. Paul, MN 55133-3427 (US)
(72) Inventor: BODZIAK, Douglas, P., Saint Paul, MN 55133-3427 (US); BOMAR, Barbara, G., Saint Paul, MN 55133-3427 (US); GROVENDER, Steven, L., Saint Paul, MN 55133-3427 (US); MOLENDA, Robert, P., Saint Paul, MN 55133-3427 (US)
(74) Representative: VOSSIUS & PARTNER
(86) International application number: PCT/US2000/003956
(87) International publication number: WO 2001/008127

(56) References cited:
- EP-A- 0 607 955
- US-A- 5 232 248
- US-A- 5 321 604
- US-A- 5 502 636
- US-A- 5 921 581

## Description

This invention relates to a method of marketing and more particular to a method of direct marketing and mail advertising using a personalized direct mail adhesive coated notepad.

Currently, direct mail packages require advertisers to purchase and coordinate the printing and assembly of a variety of items, often at more than one location or vendor. This may result in higher cost and increased chances for errors. In order to personalize items with individual's name in a direct mail package bundle, companies often pre-print inventory of generic items such as a letter, coupons, business reply card and the like that are later personalized. This personalization can result in items becoming outdated and costly to reprint. Such items in the direct mail package bundle could include, for example, a personalized letter, sale coupons, a usable gift, a business reply card, a variety of inserts describing the products or services, and address labels. Any or all of these items can be personalized, addressed, collated, placed in an envelope, and then mailed to a customer using mail services of the United States Postal Service.

Briefly, the present invention relates to a method for direct mail advertising comprising the steps of:
(1) a means for combining customer data into an interactive database in an order sort, with graphics for printing a plurality of individual adhesive-coated sheets;
(2) a means for sending this combined database to a graphic workstation, wherein artwork is prepared for all jobs;
(3) a means for electronically collating, matching and sorting the jobs, in sequence;
(4) a means for sending the electronically collated, matched and sorted interactive database to a printing press;
(5) a means for printing the artwork and data from the combined database containing the order sort on demand in order sort to an adhesive-coated master pad with a matching shipping label;
(6) a means for cutting the adhesive-coated master pads into individually sorted adhesive-coated pads;
(7) a means for packing the sorted pads into cartons with the matching shipping label in order;
(8) a means for automatically inserted the individually sorted adhesive-coated pads into mailing envelopes; and
(9) a means for mailing the stuffed envelopes to customers.

Advantageously, this new method for direct mail advertising allows the advertiser or marketer to uniquely integrate a variety of items, such as, a letter, coupons, gifts, reply cards, advertising inserts, and the like into a single novel product that handles a multitude of needs for direct mail programs and advertising promotions. A distinct feature of this system is that direct mail information, typically compiled in a database, is driven by this database that is then connected to a digital process and printing press. The digital process and printing press eliminates the need for extensive inventory because the personalized direct marketing notepads can be printed on demand, that is, when they are need and in the quantities ordered.

Thus, in a continuous fashion, customer information can be gathered, direct mail inserts can be processed, printed, and sorted and bound according to standard postal sorts, address labels printed, letters personalized, messages personalized, as well as personalization of coupons and other inserts. All of this can be done in a sequential order using a unique master pad.

Furthermore, all of the graphics and data text including advertising, information and alike can be printed on paper having coated on one side, a stripe of repositionable adhesive. Advantageously, the method of the present invention provides a single pad of repositionable notes (such as 3M's Custom Printed Post-it® Notes) having a variety of messages, greetings, coupons, and reply cards conveniently and efficiently presented to the direct mail customer. Not only does the customer receive the information the direct mail marker is trying to present, but the customer is able to continue to use the pad for a variety of purposes such as note taking, telephone messages and alike.

Additionally, the final step of mailing the direct marketing mailing notepads can be eliminated and the process can be used to provide promotions for a variety of events, wherein the "direct mailing" is actually a give-away promotion, that is, registered participants can receive personalized information and advertising.

Furthermore, this new system provides an attached business reply card, which then can become a research tool for the direct mail advertiser. The ability to produce direct mail advertising direct from compiled databases eliminates the costly assembly (which can result in insertion errors and duplications) process steps and inventory of items (which results in the higher cost of inventory maintenance).

Another advantage is that all of the individual processes utilized in the current methods of preparing a direct mail package can be either combined into a single step or even eliminated. For example, collating is done electronically, so there is no need to collate and verify by hand. Even if the collating is done by machine, personalized and matched portions of a current direct mail package is generally verified every 25 or 50 pieces. The integrity of a sort can be maintained and any sort sequence can be programmed into the appropriate software.

Uniquely the method of the present invention provides in on demand customizable, fully personalizable system for direct mail advertising.

Figure 1 depicts the process flow of the present invention for direct marketing mailing notepads.

Figure 2 (Prior Art) depicts the process flow of existing direct mail packages.

Figure 3 is a representation of direct mail packages (prior art) as compared to direct marketing mailing notepads.

The present invention provides a method for direct mail advertising comprising the steps of:
(1) a means for combining customer data into a database in postal order sort, with graphics for printing a plurality of pieces;
(2) a means for sending this combined database to a graphic workstation, wherein artwork is prepared for all jobs;
(3) a means for electronically collating, matching and sorting the jobs, in sequence;
(4) a means for sending the electronically collated, matched and sorted database to a printing press;
(5) a means for printing the artwork and data from the combined database containing the postal order sort on demand in postal order sort to a master pad with a matching shipping label;
(6) a means for cutting the master adhesive-coated pads into individually sorted adhesive-coated pads;
(7) a means for packing the sorted adhesive-coated pads into cartons with the matching shipping label in order;
(8) a means for automatically inserted the individually sorted adhesive-coated pads into mailing envelopes; and
(9) a means for mailing the stuffed envelopes to customers.

The direct mail advertiser provides the artwork, including changeable and fixed copy and a database including a customer list with appropriate customer information such as address, buying habits, demographics information and alike.

Preparing the artwork with changeable and fixed copy, and then incorporating it into a master database that includes a provided customer list with appropriate demographic information, allows an operator to electronically prepare artwork, including copy for a number of unique pages to be compiled into a single pad of note paper. Thus, the operator at a graphic workstation can complete a direct mail package bundle that can be merged with customer information to make unique and personalized package bundles that are then printed on demand and only as many as are needed, thereby eliminating unnecessary use of resources.

With the aid of the appropriate software, such as graphic, database, word processing programs and the like the information in the customer database can be collated, matched and sorted into individual sheets. Once the master templates (that is, graphic artwork and text for each individual sheet is prepared, with appropriate merge fields) are completed, the appropriate software then merges these master templates with customer information and sends the appropriate information to a printing press. This printing press can then print in black only or as appropriate, in color. Typically, there are 5 to 50 master templates, that is 5 to 50 sheets per notepad, with a back sheet. However, this number may be less, as well as more, depending on the advertisers specific requirements. The backsheet is typically the business reply card, although this is also subject to the advertisers requirements.

The artwork is printed sequentially, sheetwise, as well as being printed in postal code sort order. Additionally, a master shipping carton label can also be printed. Master adhesive-coated pads (containing for example, 6 to 8 adhesive-coated pads, of 5 to 50 sheets per pad) are then cut into individually sorted notepads. These individually cut adhesive-coated pads can then be packed into cartons wherein the carton is labeled using the matching shipping label (printed with the master pad). The cartons are then stored on pallets until it is necessary to insert the adhesive-coated pads into mailing envelopes. Alternatively, the individually cut adhesive-coated pads can be sent directly to the appropriate insertion equipment, thus inserting adhesive-coated pads directly into mailing envelopes and bypassing the carton, until such time as necessary to ship the completed mail bundles with to the U.S. Postal Service.

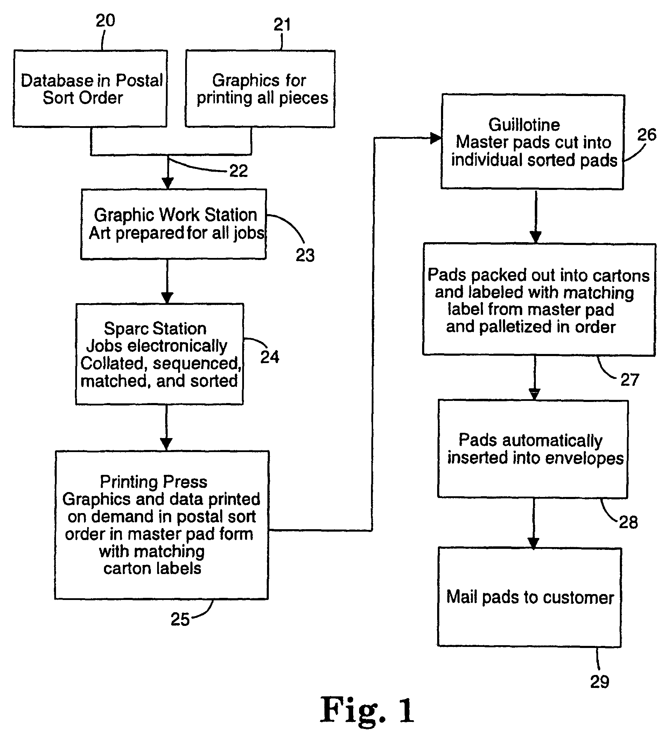

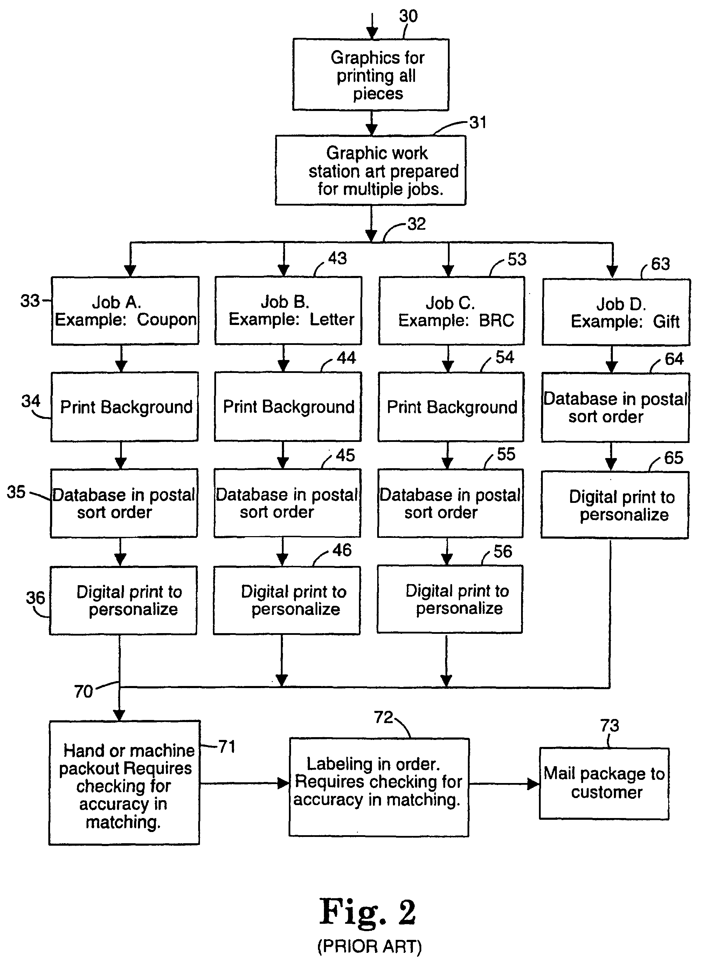

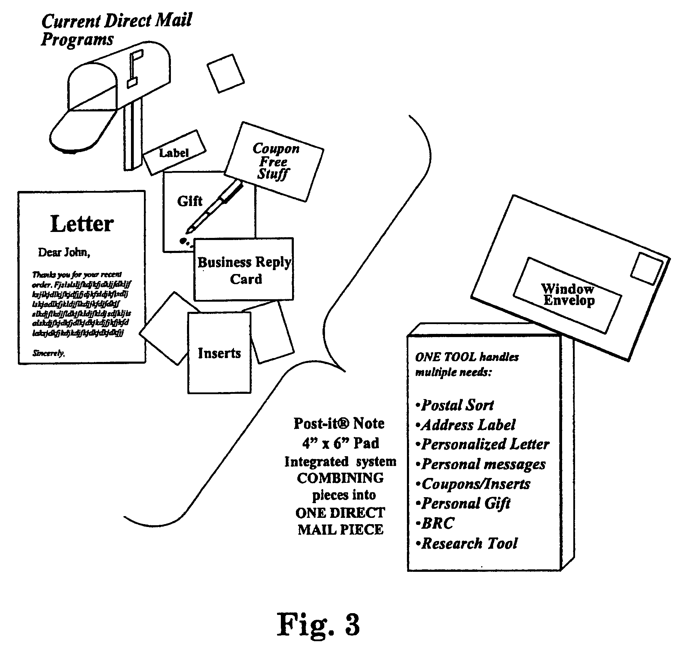

The particular advantages of the present invention may be seen by referring to Figure 3 and comparing the detailed process flow of the present invention (depicted in Figure 1) and the detailed process flow for current direct mail package bundles (depicted in Figure 2).

Figure 3 is a representation of direct mail packages (prior art) as compared to direct marketing mailing notepads. In the direct mail packages of the prior art, individual items are presented to the direct mail recipient. For example, the direct mail package could contain a coupon 36, a personalized letter 46, a gift 65, a buisness reply card 56, other assorted inserts 76. The inserts are separated prepared, personalized and then collated (see Figure 2). Once the items are collated, they are then inserted into an envelope and then must be labeled 72. At this point the two processes are the same, that is, the direct mail package is mailed 73 to a customer. In sharp contrast, is the direct marketing mailing notepads. The process of integrating, combining, sorting, personalizing, collating, binding all of the items into a single unique notepad is represented by 20-27. The notepad, itself can be printed with the mailing information, thereby eliminating the need for a separate label. Then the process proceeds to mailing the item to the customer 29.

Figure 2 represents the process flow for creating direct mail package bundles containing a variety of literature including for example, a coupon, a letter, a business reply card, and some sort of usable gift. When the direct mail advertiser seeks to create a direct mail package bundle the advertiser must provide to one or more vendors graphics for printing all of the individual pieces 30. The graphic work must be prepared for a number of jobs 31. The prepared graphic work 31 is then disseminated (either to a single vendor or multiple vendors) wherein each job (designated Job A, Job B, Job C and Job D) must be processed individually. Following the flow of a coupon, designated Job A 33, typically a background is printed 34, sorted into some order, such as the postal sort 35, and then digitally printed to personalize 36. Once Job A 33 is completed, it must be held until the other jobs are completed either sequentially or concurrently.

Likewise following the flow a letter, designated Job B 43, typically, a background is printed 44, sorted into some order, such as the postal sort 45, and then digitally printed to personalize 46. Once Job B 43 is completed, it must be held until the other jobs are completed either sequentially or concurrently.

In the same fashion, following the process flow of a business reply card ("BRC"), designated Job C 53, typically, a background is printed 54, sorted into some order, such as the postal sort 55, and then digitally printed to personalize 56. Once Job C 53 is completed, it must be held until the other jobs are completed either sequentially or concurrently. Finally, Job D 63 is prepared, wherein the gift (Job D) is sorted into some order, such as the postal sort 64 and then digitally printed to personalize 65.

Once the individual items, 36, 46, 56 and 65 are completed, they are assembled 70, either from a single vendor or multiple vendors. All of the items typically come in separate cartons or on separate pallets and must be hand or machine packed out 71. This hand or machine packing out (or sorting and collating) requires checking for accuracy in matching to insure that all of the four items (in this example) are all sent to a single person, for example "John Doe". Once the bundles are assembled 71, the bundles must be labeled in order 72. This again requires checking for accuracy in matching that the bundles personalized to John Doe are sent to John Doe. Once the bundles 71 are labeled, the direct mail package bundle can then be mailed to the customer 73.

In contrast referring to figure 1, the press and invention utilizes a database 20 with customer information that can be sorted into a sort order such as postal code order combining with all the necessary graphics including fixed then changeable copy 21. This combined database 22 is sent to a graphic workstation were all of the all art for each individual sheet can be prepared 23. This step combines steps 34, 44, and 54. Next each of the individual jobs are electronically collated, sequenced, matched and sorted 24. This combines steps 35, 45, 55, and 64. When the jobs are electronically sequenced and matched 24, the individual jobs are personalized thereby eliminating steps 36, 46, 56 and 65.

Furthermore, because the individual jobs are sequenced, matched, personalized 25, there is no need to sort and packout, thus eliminating step 71. While the invention requires cutting master adhesive-coated pads into individually sorted adhesive-coated pads 26, all of the individual jobs have been collated into a notepad configuration and can be handled in a highly efficient manner. Furthermore, packing into cartons 27 and inserting the adhesive-coated pads into envelopes. 28 can be automated. This can clearly be more efficient than step 72, which requires matching to the inserts with the mailing labels. Step 73 and 29, are identical and are merely the processes of mailing direct mail bundles to customers.

To illustrate the present invention, a typical notepad having the following features can be supplied to a direct mail advertiser for their advertising needs. The direct mail advertiser needs to provide a customer list with appropriate customer information such as addresses, buying habits, and other demographic information. In addition the advertiser needs to provide art (in electronic form if possible) and changeable and fixed copy (that is, text).

From that, the notepad vendor can prepare the following direct mail bundle:
(1) an adhesive-coated top sheet with a combination of offset printing in color and digital printing including a customer's name, address, customer information, pad number, and postal indicia;
(2) a second sheet with offset graphics and cover letter with customer's name and information inserted into the text;
(3) following sheets can have value added graphics such as "From the desk of [CUSTOMER NAME]' or motion graphics for a novel effect;
(4) a sheet containing a coupon or variety of coupons, which are linked to the customers buying history, location etc.
(5) "tagged" coupon or response card that tells the direct mailer that a specific customer has responded to a specific mailing in a measurably effective way. This provides an integrated product and process for soliciting direct mail customers and measuring their responses;
(6) a non-adhesive coated backsheet, that can be used as a business reply card;
(7) automatic printing of master sheet cut calm labels for identifying cut, sequenced adhesive-coated pads; and card and label; and
(8) integrated process that provides collated, sorted, adhesive bound sheets.

The information provided above is laid out in the page format (master template) with variable fields (merged fields). The information is then processed in sent as a job to a digital printing unit. This job is then printed in a sequenced such that a postal code sort is maintained. A master adhesive-coated pad is then cut (guillotined) as a unit and then placed in a card and in order. Each is identified with a pad number and a card and label is printed at the top of each master pad. The cartons are placed on a palette in sequence. The adhesive-coated pads then can be inserted into envelopes with clear envelopes so that the address printed on each pad can show through, using automated insertion equipment. The direct mail package bundles are then ready to mail.

As used in this application "adhesive-coated pad" or "adhesive-coated sheet" means a sheet of paper, film, coated paper, and the like is coated on at least a portion of at least one surface. Typically, there is a stripe of adhesive coated onto a back of a sheet of paper and a series of such coated sheets are stacked one on top of each other to form an adhesive-coated pad. Such an example is 3M's Post-it® Notes and Custom printed Post-it® Notes.

Various modifications and alterations of this invention will become apparent to those skilled in the art without departing from the scope of the claims.

## Claims

1. A method for direct mail advertising comprising the steps of:
(a) a means for combining customer data into an interactive database in an order sort, with graphics for printing a plurality of individual adhesive-coated sheets;
(b) a means for sending this combined interactive database to a graphic workstation, wherein artwork is prepared for all jobs;
(c) a means for electronically collating, matching and sorting the jobs, in sequence;
(d) a means for sending the electronically collated, matched and sorted jobs to a printing press;
(e) a means for printing, on demand, the artwork and data from the combined database containing the order sort, in the order sort to a master adhesive-coated pad;
(f) a means for cutting the master adhesive-coated pads into individually sorted adhesive-coated pads; and
(g) a means for automatically inserted the individually sorted adhesive-coated pads into envelopes.

2. The method according to claim 1 further comprising the step of mailing the envelopes.

## Patentansprüche

1. Verfahren für direkte Werbung per Post, umfassend die Schritte:
a) ein Mittel zum Zusammenstellen von Kundendaten in einer interaktiven Datenbank in eine Sortierorder (order sort), mit Graphiken zum Drucken einer Vielzahl individueller klebstoffbeschichteter Blätter;
b) ein Mittel, um diese zusammengestellte, interaktive Datenbank an einen graphischen Arbeitsplatz zu senden, an welchem eine Druckvorlage für alle Jobs hergestellt wird;
c) ein Mittel zum elektronischen Kollationieren, Anpassen und Sortieren der Jobs der Reihe nach;
d) ein Mittel zum Senden der elektronisch kollationierten, angepassten und sortierten Jobs an eine Druckmaschine;
e) ein Mittel zum Drucken, auf Anforderung, der Druckvorlage und der Daten von der zusammengestellten Datenbank, welche die Sortierorder (order sort) enthält, in der Sortierorder auf eine klebstoffbeschichtete Hauptvorlage (master pad);
f) ein Mittel zum Zuschneiden der klebstoffbeschichteten Hauptvorlagen zu individuell sortierten, klebstoffbeschichteten Vorlagen (pads); und
g) ein Mittel zum automatischen Einbringen der individuell sortierten, klebstoffbeschichteten Vorlagen in Umschläge.

2. Verfahren nach Anspruch 1, weiterhin umfassend den Schritt des Versendens der Umschläge.

## Revendications

1. Méthode de publipostage, comprenant :
a) des moyens permettant de combiner des données de clients dans une base de données interactive triée par commande, avec des graphiques pour imprimer une pluralité de feuilles individuelles recouvertes d'adhésif ;
b) des moyens permettant d'envoyer ladite base de données interactive combinée à une station de travail graphique, dans laquelle le document d'exécution est préparé pour toutes les tâches ;
c) des moyens permettant d'assembler, apparier et trier en séquence les tâches de façon électronique ;
d) des moyens permettant d'envoyer à une presse à imprimer les tâches assemblées, appariées et triées de façon électronique ;
e) des moyens permettant d'imprimer, à la demande, le document d'exécution et les données provenant de la base de données combinée contenant le tri par commande, selon le tri par commande sur un bloc original recouvert d'un adhésif ;
f) des moyens permettant de découper les blocs originaux recouverts d'un adhésif en blocs individuels recouverts d'un adhésif triés ; et
g) des moyens permettant d'insérer automatiquement dans des enveloppes les blocs recouverts d'un adhésif triés individuellement.

2. Méthode selon la revendication 1, comprenant en outre l'étape consistant à expédier les enveloppes.
